# EUROPEAN PATENT APPLICATION

(11) **EP 2 362 481 A2**
(43) Date of publication of application: **31.08.2011**
(21) Application number: 11156027.2
(22) Date of filing: 25.02.2011
(51) Int. Cl.: H01M 10/44

(54) **Power storage system**

(30) Priority: 25.02.2010 JP 2010039910; 29.10.2010 JP 2010243651
(71) Applicant: SANYO ELECTRIC CO., LTD., Moriguchi-shi, Osaka 570-8677 (JP)
(72) Inventor: Schimayama, Hajime, Moriguchi-shi Osaka 570-8677 (JP); Hataya, Daisuke, Moriguchi-shi Osaka 570-8677 (JP)
(74) Representative: Glawe, Delfs, Moll

(57) **Abstract**

A power storage system controls a charging mode in which an assembled battery including a plurality of battery modules is charged. The assembled battery is charged through a constant current control based on a predetermined current value in the beginning of the charging mode and is charged through a constant voltage in the end of the charging mode. A determination part determines whether an apparatus electrically connected to an electric power line which the power storage system is electrically connected is in active. A controlling part constantly controls the current value for charging the assembled battery in the charging mode. In a case where the determination part determines that the apparatus is not in active, the controlling part sets the constant current value to a first current value at the beginning of a time period in which the charging mode is performed. In a case where the determination part determines that the apparatus is in active, the controlling part sets the constant current value to a second current value lower than the first current value in the beginning of the time period.

## Description

The disclosure of Japanese Patent Applications No. 2010-039910 filed on February 25, 2010 and No. 2010-243651 filed on October 29, 2010, including specifications, drawings and claims is incorporated herein by reference in its entirety.

### BACKGROUND

The present invention relates to a power storage system that controls charging and discharging of an assembled battery including a plurality of battery modules.

There is a system including a storage battery which is connected to a commercial electric power line from grid so that the storage battery is charged with electric energy supplied from the commercial electric power line during a predetermined time period such as nighttime or the like, and the storage battery is discharged mainly during a time period in which an increase in the amount of electric power used is estimated, such as daytime or the like (for example, refer to JP-A-2006-149037).

However, in a case where a device (for example, a hot water supplier) which operates during a predetermined time period such as nighttime or the like has already been electrically connected to the commercial electric power line to which the storage battery described above is connected, an amount of electric energy necessary to charge the storage battery and operate the device at the same time becomes large. Depending on the number or size of the device electrically connected to the commercial electric power line, the required amount of electric power may exceed the upper limit of the available electric power capacity per hour unit. In such case, it is necessary to change the upper limit value of the available electric power capacity in order to introduce the power storage system. This may be a barrier to introduce the power storage system.

### SUMMARY

It is therefore an object of at least one embodiment of the present invention to solve any problems occurring when both the operation of the device and the charging of the storage battery are performed in a predetermined time period in a configuration in which the storage battery can be charged with commercial electric power.

In order to achieve the above-described object, according to an aspect of the embodiments of the present invention, there is provided a power storage system that controls a charging mode in which an assembled battery including a plurality of battery modules is charged, the assembled battery being charged through a predetermined current control based on a constant current value in the beginning of the charging mode and being charged through a constant voltage in the end of the charging mode, the power storage system comprising: a determination part that determines whether an apparatus electrically connected to an electric power line which the power storage system is electrically connected is in active; and a controlling part that constantly controls the current value for charging the assembled battery in the charging mode, wherein in a case where the determination part determines that the apparatus is not in active, the controlling part sets the constant current value to a first current value in the beginning of a time period in which the charging mode is performed, and wherein in a case where the determination part determines that the apparatus is in active, the controlling part sets the constant current value to a second current value lower than the first current value in the beginning of the time period in which the charging mode is performed.

In the power storage system, the controlling part may calculate a current value for use in the constant current control of the charging mode, which is necessary to charge the assembled battery substantially throughout the time period at up to a scheduled charging amount of electric energy, and the charging mode may be started with the calculated current value.

The power storage system may further comprise a memory that stores the current value for use in the constant current control of the charging mode for each scheduled charging amount of the electric energy, and the controlling part may retrieve the current value from the memory based on a scheduled charging amount of the electric energy.

In the power storage system, the current value stored in the memory may be set such that the sum of the current value and a current value used in the apparatus when the apparatus is in active does not exceed a predetermined current value.

In the power storage system, the controlling part may obtain a scheduled time period in which the apparatus will be in active, the controlling part may estimate an estimated time period in which the apparatus is not in active in the predetermined time period in the charging mode, and in a case where the assembled battery can be charged at up to a scheduled charging amount in the estimated time period, the charging mode may be executed in the estimated time period.

In the power storage system, the controlling part may obtain a scheduled time period in which the apparatus is will be in active, the controlling part may estimate an estimated time period in which the apparatus is not in active in the predetermined time period in the charging mode, and in a case where the assembled battery cannot be charged at up to a scheduled charging amount in the estimated time period, the controlling part may set the current value to the second current value and the charging mode may be started with the second current value.

In the power storage system, the beginning of the charging mode may include a predetermined time period from a time point at which the charging mode is started.

In the power storage system, the predetermined time period in which the charging mode is performed may include nighttime.

According to the aspect of the embodiments of the present invention, the assembled battery can be charged such that the nighttime power consumption does not exceed a predetermined electric power capacity even when an apparatus other than the power storage system is in active during specific time period, such as nighttime or the like.

According to another aspect of the embodiments of the present invention, there is provided a power storage system that controls an assembled battery including a plurality of battery modules, and a charging mode in which the assembled battery is charged through a constant current control based on a constant current value in the beginning of charging of the assembled battery and is charged through a constant voltage control in the end of the charging of the assembled battery, wherein when determining that an apparatus electrically connected an electric power line to which the power storage system is electrically connected is in active in the beginning of a time period in which the charging mode is performed, the constant current value for charging the assembled battery in the charging mode is set smaller than a value used when the apparatus is not in active.

According to still another aspect of the embodiment of the present invention, there is provided a controlling method of a power storage system that controls an assembled battery including a plurality of battery modules, and a charging mode in which the assembled battery is charged through a constant current control based on a constant current value in the beginning of charging of the assembled battery and is charged through a constant voltage control in the end of the charging of the assembled battery, the method comprising:
determining whether an apparatus electrically connected an electric power line to which the power storage system is electrically connected is in active in the beginning of a time period in which the charging mode is performed; and
setting the constant current value for charging the assembled battery in the charging mode smaller than a value used when the apparatus is not in active, if it is determined that the apparatus is in active.

### BRIEF DESCRIPTION OF THE DRAWINGS

In the accompanying drawings:
Fig. 1 is a schematic view illustrating the configuration of a power storage system according to a first embodiment of the present invention;
Figs. 2A and 2B are graphs illustrating the variation of voltage and electric current during charging;
Fig. 3 is a set of schematic views illustrating the relationship between charging patterns and the operation states of a heat pump hot water supplier;
Fig. 4 is a flowchart illustrating the operation of a controller according to the first embodiment;
Fig. 5 is a flowchart illustrating the operation of a controller according to a second embodiment of the present invention; and
Fig. 6 is a flowchart illustrating the operation of a controller according to a third embodiment of the present invention.

### DETAILED DESCRIPTION OF THE EMBODIMENTS

### [First Embodiment]

Hereinafter, embodiments of the present invention will be described with reference to the accompanying drawings.

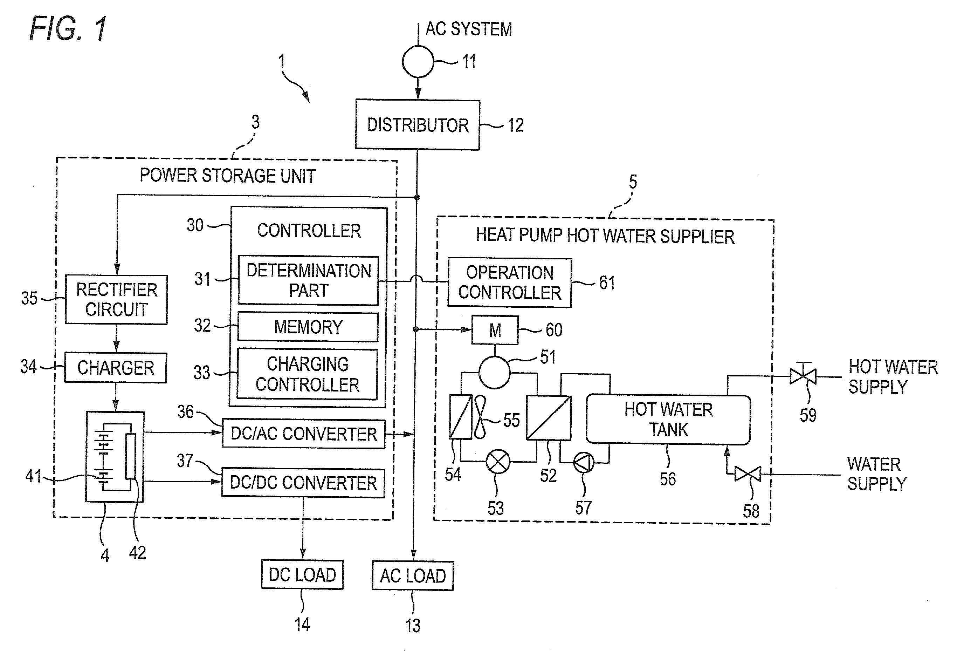

Fig. 1 is a schematic view illustrating the configuration of a power storage system 1 according to a first embodiment to which the present invention is applied.

The power storage system 1 shown in Fig. 1 is comprised of a commercial electric power line 11 supplied by an electric power company and a power storage unit 3 including an assembled battery 4 which is connected to the commercial electric power line 11.

The commercial electric power line 11 from the grid is connected to the power storage unit 3 and an AC load 13 which is operated by alternating current power through a distributor 12 including a current limiting breaker and a reverse current flow preventer which are not shown. The commercial electric power line 11 supplies alternating current power to the power storage unit 3 and the AC load 13. Examples of the AC load 13 include lighting apparatuses, air conditioning apparatuses, office equipment and a variety of electric home appliances.

The power storage unit 3 includes the assembled battery 4 and a charger 34 that charges the assembled battery 4, and the charger 34 is connected to the commercial electric power line 11 through a rectifier circuit 35. The rectifier circuit 35 converts an alternating current supplied from the commercial electric power line 11 to a direct current and supplies the direct current to the charger 34. The charger 34 charges the assembled battery 4 with the direct current.

The assembled battery 4 includes a plurality of battery modules 41 which are connected to each other in series and/or parallel and a controller 42 that monitors the temperature or voltage of the battery modules 41 or the electric current in the assembled battery 4. The battery modules 41 are secondary battery modules such as a lithium ion battery, a nickel hydrogen battery or the like, and the embodiment will describe a case in which the lithium ion battery modules are used.

The controller 42 detects the temperature of the battery modules 41 and stops charging and discharging when the detected temperature is above a predetermined value. The controller 42 also detects the voltage between both ends of the plurality of battery modules 41 connected in series, calculates the Relative State Of Charge (RSOC) based on the detected voltage values or electric current values and outputs the measured values, RSOC data or the like to an external control unit connected to the assembled battery 4.

A DC/AC converter 36 is connected to the assembled battery 4, and direct current power discharged from the assembled battery 4 is converted to an alternating current by the DC/AC converter 36 and then output to the AC load 13. In addition, a DC/DC converter 37 is connected to the assembled battery 4 and direct current power from the assembled battery 4 is converted to direct current power with a predetermined voltage through the DC/DC converter 37 and then is supplied to a DC load 14. Examples of the DC load 14 include a direct current home appliance which is operated by direct current power.

On the other hand, a heat pump hot water supplier 5 is electrically connected to the commercial electric power line 11 through the distributor 12. The heat pump hot water supplier 5 is configured to boil and store hot water during nighttime for using the stored hot water during daytime and to supply the hot water throughout a building. The heat pump hot water supplier 5 is comprised of: a heat pump cycle including a compressor 51, a radiator 52, an expansion valve 53 and an evaporator 54; and a fan 55 provided in the evaporator 54. A refrigerant from the compressor 51 radiates heat in the radiator 52, is depressurized by the expansion valve 53, moves to the evaporator 54 to absorb heat in the evaporator 54, and then moves back to an intake tube of the compressor 51. In addition, the heat pump hot water supplier 5 includes a hot water tank 56 that accumulates hot water and a pump 57 that supplies water or hot water in the hot water tank 56 to the radiator 52 in a circulatory manner. Water or hot water supplied to the radiator 52 by the pump 57 is heated by radiation of the radiator 52 so as to become high-temperature hot water and then is moved back to the hot water tank 56. A waterworks pipe is connected to the bottom of the hot water tank 56 through a water supply valve 58 so that water is supplied, and hot water in the hot water tank 56 is supplied through a hot water supplying hole provided with a valve 59.

The heat pump hot water supplier 5 includes an operation controller 61 that controls the running/stopping of a motor 60 that drives the compressor 51, the running/stopping of the fan 55, the running/stopping of the pump 57 and the opening/closing operation of the water supplying valve 58. The operation controller 61 includes a clock and performs a hot water supply operation at a preset operation time period (at nighttime). The operation time period is set mainly to a time period in which hot water supply is considered unnecessary. The operation controller 61 drives the motor 60 and the fan 55 so as to supply a high-temperature refrigerant to the radiator 52, and also appropriately opens the water supplying valve 58 to supply water to the hot water tank 56 and drives the pump 57 so as to boil the hot water in the hot water tank 56 based on the detected values of a temperature sensor (not shown) that detects the temperature of hot water inside the hot water tank 56 and a hot water amount sensor that detects the amount of hot water inside the hot water tank 56.

Before the set operation time period for boiling the water or when reaching the boiling time, the operation controller 61 detects the amount of residual hot water and the temperature of hot water in the hot water tank 56, obtains the amount of hot water which needs to be boiled, and calculates a necessary time to boil the amount of hot water. The operation controller 61 obtains starting time for boiling the water such that a necessary amount of hot water is boiled at the end of the set operation time period (for example, 7 am), and activates each unit in the heat pump hot water supplier 5 when reaching the starting time. That is, while the heat pump hot water supplier 5 adjusts the starting time based on the amount or temperature of hot water remained in the hot water tank 56, the temperature of city water or the like, the finishing time is fixed to a set time. The operation controller 61 has a function of outputting a starting signal to an externally connected apparatus.

On the other hand, the power storage unit 3 includes a controller 30 that controls charging and discharging of the assembled battery 4. The power storage unit 3 alternately performs a charging mode in which the assembled battery 4 is charged during nighttime with a small demand of electric power and a discharging mode mainly during a time period in which demand of the electric power for the AC load 13 and the DC load 14 increases.

The controller 30 is configured so as to be capable of communicating signals with the operation controller 61 in the heat pump hot water supplier 5. The controller 30 includes a determination part 31 that determines whether the heat pump hot water supplier 5 is in active or not by detecting starting signals input from the operation controller 61, a memory 32 that stores the starting time of the heat pump hot water supplier 5, which is determined by the determination part 31, and a charging controller 33 that charges the assembled battery 4 based on a plurality of operation times stored in the memory 32. Further, it is also possible to use a current detector or the like and then determine from an increase in electric current whether the heat pump hot water supplier 5 is in active or not.

The determination part 31 includes a clock, monitors the starting signals input from the operation controller 61 in the charging mode, and, when detecting an starting signal, stores the detection time in the memory 32 as the starting time of the heat pump hot water supplier 5. In the embodiment, the memory 32 stores the starting times of the heat pump hot water supplier 5 on a daily basis at least for the previous 7 days.

The charging controller 33 obtains the amount of electric energy to be charged in the assembled battery 4 based on data of RSOC (residual amount) output from the controller 42 in the assembled battery 4 when the charging mode starts, selects a pattern of the output current and voltage of the charger 34 based on the starting times for the previous 7 days stored in the memory 32, and then charges the assembled battery 4 according to the selected pattern.

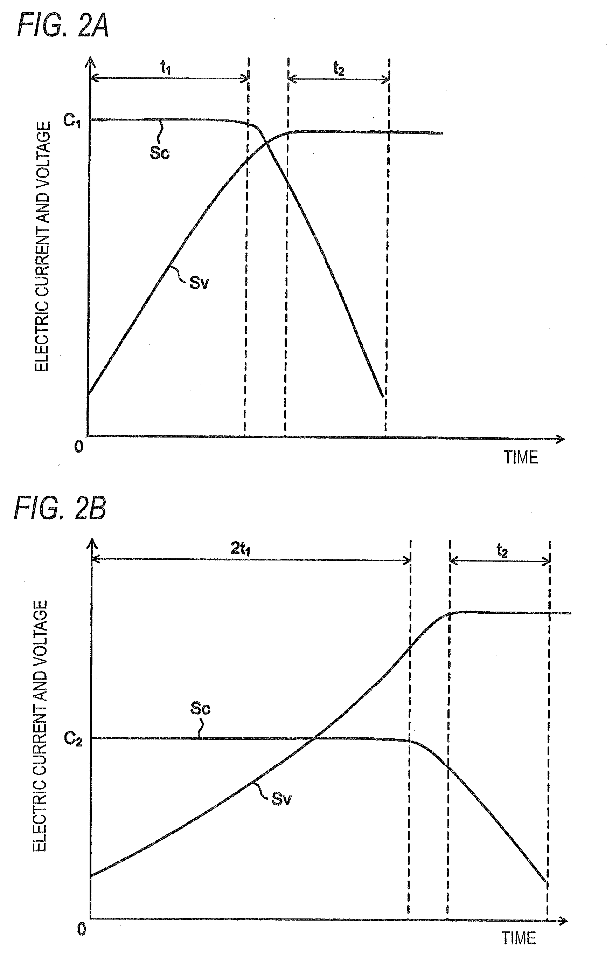

Figs. 2A and 2B are graphs illustrating the variation of voltage and electric current output from the charger 34 in the charging mode, and Fig. 2A illustrates the output of the charger 34 when charging the assembled battery 4 with a rated current, and Fig. 2B illustrates the output of the charger 34 when the output current of the charger 34 is set to be half of the rated current. In the drawing, the curves Sc indicate the variation of electric current values, and the curves Sv indicate the variation of electric voltage values.

As shown in Fig. 2A, charging of the assembled battery 4 is performed by constant current and constant voltage charging control (CCCV). Since it is necessary to manage the electric current values and the electric voltage values so as not to exceed the existing constant values during charging of the lithium ion battery, a constant current control, with which the current values Sc are maintained constant, is performed until the terminal voltage of the assembled battery 4 is increased up to near the rated voltage from the start of charging, and, if the charging electric energy forthe assembled battery 4 is increased so that the terminal voltage of the assembled battery 4 is increased up to near the rated voltage, a constant voltage control, with which the electric voltage values Sv are maintained constant so as not to exceed the existing rated constant value, is started. Finishing of charging is determined by either the voltage of the assembled battery 4 reaching the rated voltage which corresponds to full charging or the RSOC data (charging amount) output from the controller 42 reaching a predetermined value. A time period during which the constant current control is performed after the start of charging is denoted as a constant current control period t1, and a time period during which the constant voltage control is performed after the constant current control period t1 is denoted as a constant voltage control period t2.

The values of output current by the charger 34 can be adjusted by signals from the charging controller 33, and Fig. 2A shows a case in which charging is performed with a charging current 1C (rated current during charging), and Fig. 2B shows a case in which charging is performed with a charging current 0.5C. If charging is performed with 0.5C, since a small amount of electric current flows into the assembled battery 4, the constant current control period t1 almost doubles (2t1) compared to the case of charging with the electric current C1. On the other hand, the length of the constant voltage control period t2 seldom changes in both the case of 1C and the case of 0.5C. That is, in the charging mode, if the output current values of the charger 34 are varied, since the constant current control period t1 varies in almost inverse proportion to the current values, the current values and the charging times can be adjusted based on the relationship between the current values and the charging times in the charging mode.

During a time period in which the power storage system 1 performs the charging mode, the heat pump hot water supplier 5 is also activated to accumulate hot water. Thus, electric power for both the operation of the heat pump hot water supplier 5 and the charging of the assembled battery 4 is supplied from the commercial electric power line 11. However, the distributor 12 is provided with the current limiting breaker with a predetermined capacity, and thus there are concerns about power supply shutdown if the sum of the electric current flow for the operation of the heat pump hot water supplier 5 and the electric current flow for charging the assembled battery 4 exceeds the allowable current (the amount of electric current per hour unit) of the breaker in the distributor 12.

Therefore, the power storage unit 3 of the embodiment adjusts the output current of the charger 34 by the control of the charging controller 33 according to the operation state of the heat pump hot water supplier 5 and charges the assembled battery 4 to the extent that the output current does not exceed the allowable current of the distributor 12.

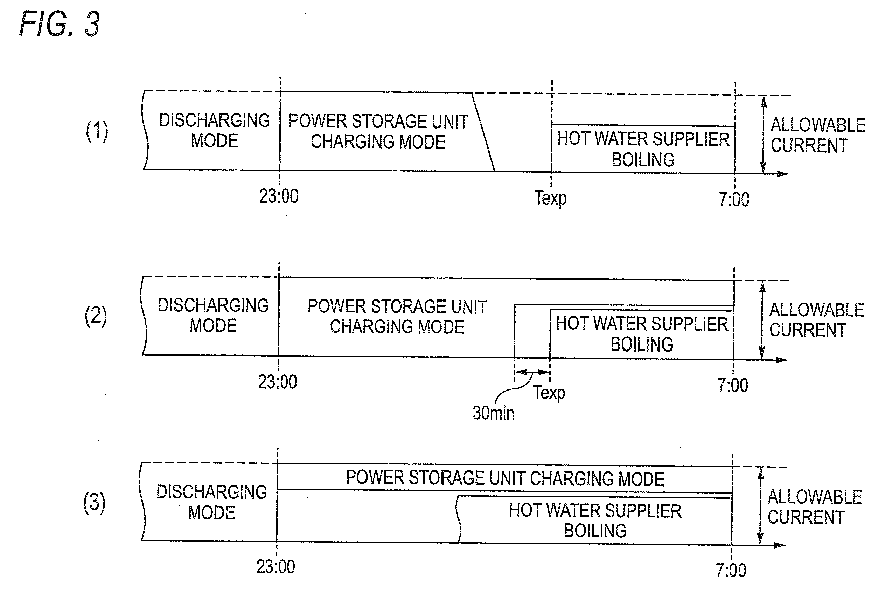

Fig. 3 is a set of schematic views illustrating three charging patterns (1) to (3) and the operation state of the heat pump hot water supplier 5 as specific examples of the adjustment of current values in the charging mode. In the drawing, the vertical axis indicates current values, and the maximum current values allowed in the commercial electric power line 11 is represented by dashed lines. The horizontal axis in the drawing indicates time.

In addition, in the drawings, Texp refers to an estimated time of the starting time of the heat pump hot water supplier 5. The estimated time Texp of the starting time of the heat pump hot water supplier 5 is, as described below, an estimated value obtained by the charging controller 33 from the starting times of the heat pump hot water supplier 5 of the previous week which are stored in the memory 32.

The charging controller 33 selects and performs any one of the charging patterns (1) to (3) shown in Fig. 3 based on the estimated starting time Texp and a time necessary for charging the assembled battery 4.

In the charging pattern (1), the assembled battery 4 is charged with the maximum output current of the charger 34 from the starting time (herein, 11 pm) of the charging mode. The charging pattern (1) is performed in a case in which the charging of the assembled battery 4 can be completed before the estimated starting time Texp of the heat pump hot water supplier 5. Since the estimated starting time Texp is an estimated value, the power storage system 1 allows a margin of 30 minutes. Therefore, the charging pattern (1) is selected in a case in which the charging of the assembled battery 4 is finished 30 minutes or more before the estimated starting time Texp.

In the charging pattern (2), charging is started with the maximum output current of the charger 34 at the starting time of the charging mode, and, from 30 minutes before the estimated starting time Texp, subsequent charging is performed with a decreased output current of the charger 34. The decreased output current of the charger 34 is electric current value which does not exceed the allowable current of the distributor 12 even when a value of electric current flowing in the heat pump hot water supplier 5 is added thereto and can complete the charging of the assembled battery 4, if the charging is performed with the above allowable electric current value until the finishing time of the charging mode. The electric current value may be set and stored in the memory 32 in advance, and may be calculated by the charging controller 33 based on the charging electric energy of the assembled battery 4 at the starting time of the charging mode.

The charging pattern (2) is performed in a case in which the charging of the assembled battery 4 cannot be finished 30 minutes or more before the estimated starting time Texp of the heat pump hot water supplier 5, but the charging can be finished less than 30 minutes before the estimated starting time Texp or at the same time as the estimated starting time Texp.

In the charging pattern (3), charging is performed with a low output current value of the charger 34 from the starting time of the charging mode. The charging pattern (3) is performed in a case in which the estimated starting time Texp of the heat pump hot water supplier 5 cannot be calculated or the charging of the assembled battery 4 cannot be finished at the same time as or before the estimated starting time Texp of the heat pump hot water supplier 5. The output electric current of the charger 34 is, similarly to the low output current value in the charging pattern (2), an electric current value that does not exceed the allowable current of the distributor 12 even when summed with an electric current value flowing through the heat pump hot water supplier 5, and can finish the charging of the assembled battery 4 if charging is performed at the electric current value until the finishing time of the charging mode.

Meanwhile, the maximum current value in the constant current control period t1 after the start of charging in the charging patterns (1) and (2) and the current value in the constant current control period t1 after the start of charging in the charging patterns (3) may be a current value stored in the memory 32 in advance as a fixed value, but may also be determined by the controller 30 based on the scheduled charging electric energy to be charged in the assembled battery 4 at the start of the charging mode. In this case, the charging controller 33 calculates the scheduled charging electric energy to be charged in the assembled battery 4 based on RSOC data output by the battery modules 41 in the assembled battery 4 and then obtains an electric current value for charging the scheduled charging electric energy. Examples of methods for obtaining the maximum electric current value from the scheduled charging electric energy include a method that stores a plurality of sets of scheduled charging electric energy and the maximum current value which corresponds thereto in advance in the memory 32, selects the closest scheduled charging electric energy from the memory 32 by the charging controller 33 at the start of the charging mode, and then obtains the maximum current value which corresponds to the scheduled charging electric energy. In this case, the scheduled charging electric energy, that is, the maximum current value optimal for the residual electric energy of the assembled battery 4 can be easily set. In addition, since charging is performed under conditions optimal for the residual electric energy of the assembled battery 4, it is possible to achieve a longer service life of the assembled battery 4 by charging an unfilled amount, instead of 100% charging the capacity of the assembled battery 4.

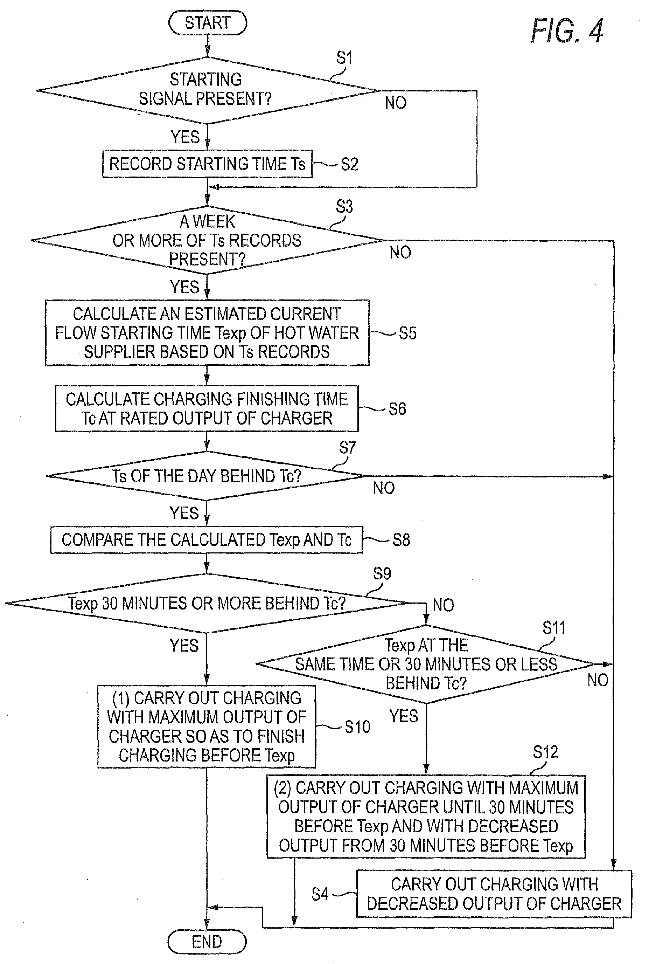

Fig. 4 is a flowchart illustrating the operation of the controller 30.

The determination part 31 included in the controller 30 monitors starting signals input by the operation controller 61 in the heat pump hot water supplier 5 (Step S1), and, in a case in which an starting signal is detected, stores the detection time in the memory 32 as an starting time Ts (Step S2), and then moves to Step S3. In addition, in a case in which no starting signal is detected, the process moves to Step S3 as is. Meanwhile, detection of starting signals is performed at all times during the charging mode even after Steps S 1 and S2, and, in a case in which starting signals are detected, the starting time is stored in the memory 32.

In Step S3, the charging controller 33 in the controller 30 determines whether the memory 32 stores starting times Ts of a week (7 days) or more. Here, in a case in which the memory 32 does not store starting times Ts of a week or more or stores no starting time Ts (Step S3; No), the charging controller 33 selects the charging pattern (3) (Fig. 3) and perform charging with the minimum output current of the charger 34 (Step S4), and, once the charging is completed, finishes the present process.

On the other hand, in a case in which the memory 32 stores starting times Ts of a week (7 days) or more (Step S3; Yes), the charging controller 33 performs calculation that estimates the starting time of the heat pump hot water supplier 5 of the corresponding day based on the starting times Ts stored in the memory 32, and then calculates an estimated starting time Texp (Step S5). The calculation of the estimated starting time Texp is performed by, for example, calculation that obtains the average of the starting times Ts of the previous week, calculation that obtains standard deviation, approximate calculation, such as a least square method, or the like. By obtaining the estimated starting time Texp, time period where the heat pump hot water supplier 5 is not in active becomes clarified.

Subsequently, the charging controller 33 calculates a charging finishing time Tc, at which the charging of the assembled battery 4 is finished, of a case in which the output current of the charger 34 is presumed to be the maximum, that is, a value almost equivalent to the allowable current value of the distributor 12 (Step S6).

Here, the charging controller 33 determines whether the starting time Ts of the corresponding day falls behind the charging finishing time Tc (Step S7), and, in a case in which the starting time Ts falls ahead of the charging finishing time Tc (Step S7; No), moves the process to Step S4, and then performs charging with the minimum output current of the charger 34, and, once the charging is completed, finishes the present process.

In addition, in a case in which the starting time Ts falls behind the charging finishing time Tc (Step S7; Yes), the charging controller 33 compares the calculated estimated starting time Texp and charging finishing time Tc (Step S8), and determines whether the estimated starting time Texp falls 30 minutes or more behind the charging finishing time Tc (Step S9).

Here, in a case in which the estimated starting time Texp falls 30 minutes or more behind the charging finishing time Tc (Step S9; Yes), the charging controller 33 selects the charging pattern (1) (Fig. 3) and performs charging with the maximum output current of the charger 34 (Step S10), and, once the charging is completed, finishes the present process.

In addition, in a case in which the estimated starting time Texp does not fall 30 minutes or more behind the charging finishing time Tc (Step S9; No), the charging controller 33 further determines whether the estimated starting time Texp corresponds to "being at the same time as or 30 minutes or less behind the charging finishing time Tc" (Step S11). Here, in a case in which the estimated starting time Texp corresponds to "being at the same time as or 30 minutes or less behind the charging finishing time Tc (Step S11; Yes)," the charging controller 33 selects the charging pattern (2) (Fig. 3) to start charging with the maximum output current of the charger 34 and then performs the charging with the minimum output current of the charger 34, which is to be switched on 30 minutes before the estimated starting time Texp (Step S12), and, once the charging is completed, finishes the present process.

On the other hand, in a case in which the estimated starting time Texp does not correspond to "being at the same time as or 30 minutes or less behind the charging finishing time Tc," that is, the estimated starting time Texp falls ahead the charging finishing time Tc (Step S11; No), the charging controller 33 moves the process to Step 4 and charges the assembled battery 4 in the charging pattern (3).

As described above, according to the power storage system according to the first embodiment of the present invention, in the power storage system 1 provided with the assembled battery 4 which is chargeable and dischargeable and includes a plurality of battery modules 41, and the controller 30 that controls the charging mode in which the assembled battery 4 is charged and the discharging mode in which the assembled battery 4 is discharged and also controls the charging mode so as to be performed during the time period of late night power supply or during nighttime based on time period-specific power supply contracts, the assembled battery 4 is charged through the constant current control based on a predetermined constant current value at the start of the charging and the assembled battery 4 is charged through the constant voltage control when finishing the charging, the determination part 31 is provided to determine the presence of the heat pump hot water supplier 5 which operates during the time period of late night power supply or during nighttime based on time period-specific power supply contracts, and, when the heat pump hot water supplier 5 is in active, the constant current value used when performing charging of the assembled battery 4 in the charging mode is made smaller than the value used when the heat pump hot water supplier 5 is not in active; therefore the assembled battery 4 can be charged using cheap nighttime electric power so that the sum of the electric current necessary for charging the assembled battery 4 and operating the heat pump hot water supplier 5 does not exceed the allowable current of the distributor 12.

In addition, the controller 30 obtains a constant current value used for the constant current control in the start of the charging of the assembled battery 4, which is necessary to charge the scheduled amount of electric energy when performing charging of the assembled battery 4 substantially throughout whole time period of the charging mode based on scheduled charging amount of electric current and/or electric power which performs charging of the assembled battery 4 in the charging mode, and outputs the constant current value from the charger 34 so as to start charging; therefore the assembled battery 4 can be reliably charged during nighttime or late nighttime in which the charging mode is performed while suppressing the electric energy amount of charging.

Furthermore, the controller 30 includes the memory 32 that obtains and stores in advance a plurality of current values, which correspond to the scheduled charging amount and is used for the constant current control at the start of charging, for each scheduled charging electric energy and thus specifies the current value in the start of charging in the charging mode based on the scheduled charging electric energy; therefore the scheduled charging electric energy, that is, the optimal maximum current value can be easily set according to the residual amount of the assembled battery 4.

In addition, since the current value stored in the memory 32 is set so that the total of this current value and the current value used for an operation of the heat pump hot water supplier 5 does not exceed a predetermined electric current value, the assembled battery 4 can be charged during an operation of the heat pump hot water supplier 5 in a manner that the current value does not exceed a limited current value.

In addition, the controller 30 obtains a scheduled time period (time period) in which the heat pump hot water supplier 5 is in active based on the starting times Ts of the heat pump hot water supplier 5, which is stored in the memory 32, estimates a time period in which the heat pump hot water supplier 5 is not in active during the time period in the charging mode from the stored scheduled time period, starts charging of the assembled battery 4 before an operation of the heat pump hot water supplier 5 starts in a case in which the assembled battery 4 can be charged at up to the scheduled charging ele3ctric energy during the estimated time period, and the charging of the assembled battery 4 is started using the current value which is the current value made lower at the start of the charging mode in a case in which the assembled battery 4 can be charged at up to the scheduled charging electric energy during the estimated time period; therefore the current value of the assembled battery 4 during charging can be appropriately set according to the operation state of the heat pump hot water supplier 5. Therefore, it is possible to finish the charging of the assembled battery 4 efficiently within a short time and to charge the assembled battery 4 in a manner of not exceeding the allowable current of the distributor 12.

Furthermore, the starting time of charging in the charging mode is included in a predetermined time period from the start of the charging mode, so that a determination of the current value for the constant current control or the like, may be performed not only at the set starting time of the charging mode (for example, 11 pm) but also during time period passing the starting time of the charging mode.

### [Second Embodiment]

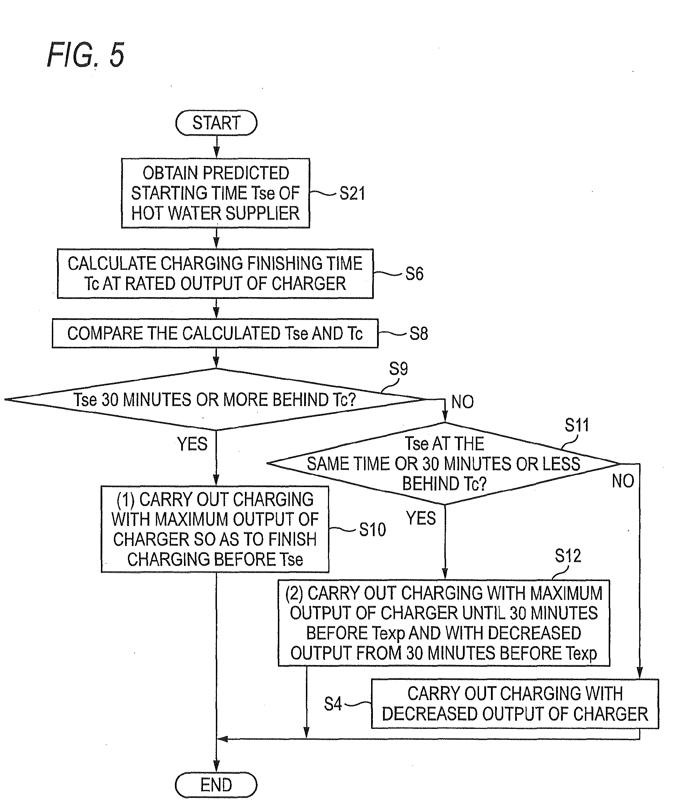

Fig. 5 is a flowchart illustrating the operation of the controller 30 according to the second embodiment to which the present invention is applied.

The second embodiment describes the power storage system 1 described in the above first embodiment, in which the operation controller 61 included in the heat pump hot water supplier 5 is constituted to output data showing the scheduled starting times of the heat pump hot water supplier 5 to the controller 30.

That is, the operation controller 61 in the heat pump hot water supplier 5 detects the amount and temperature of hot water in the hot water tank 56 before the set operation time period or when the operation time period is reached, obtains an amount of hot water which needs to be boiled, and calculates a necessary time to boil the amount of hot water. Additionally, the operation controller 61 obtains an starting time at which boiling is started so that boiling of the necessary amount of hot water is finished at the end of the set operation time period. The operation controller 61 outputs data showing the obtained starting time to the controller 30, and the determination part 31 in the controller 30 receives the data. The scheduled starting time of the heat pump hot water supplier 5 obtained based on the data received by the controller 30 is treated as a scheduled starting time Tse.

In the operation shown in Fig. 5, the controller 30 obtains the scheduled starting time Tse based on the data input from the operation controller 61 by a function of the determination part 31 (Step S21), and then carries out Step S4 and the operations of Step S6 and later which have been described in the first embodiment. In the present operation, instead of the estimated starting time Texp, the obtained scheduled starting time Tse is used.

That is, the controller 30 calculates a charging finishing time Tc for a case in which the output current of the charger 34 is presumed to be the rated current value by a function of the charging controller 33 (Step S6), compares the obtained scheduled starting time Tse and the charging finishing time Tc (Step S8), and determines whether the scheduled starting time Tse falls 30 minutes or more behind the charging finishing time Tc (Step S9).

In a case in which the scheduled starting time Tse falls 30 minutes or more behind the charging finishing time Tc (Step S9; Yes), the charging controller 33 selects the charging pattern (1) and performs charging (Step S10).

In addition, in a case in which the scheduled starting time Tse does not fall 30 minutes or more behind the charging finishing time Tc (Step S9; No), the charging controller 33 determines whether the scheduled starting time Tse corresponds to "being at the same time as or 30 minutes or less behind the charging finishing time Tc" (Step S11), and, in a case in which the scheduled starting time Tse meets the above condition, selects the charging pattern (2) and performs charging (Step S12), and, in a case in which the scheduled starting time Tse fails to meet the above condition, selects the charging pattern (3) and charges the assembled battery 4 (Step S4).

As described above, according to the second embodiment to which the present invention is applied, by obtaining the scheduled starting time Tse, at which a boiling of the heat pump hot water supplier 5 is started, at, before or after the starting time of the charging mode, it is possible to appropriately set a current value for the constant current control at the charging starting time based on the scheduled starting time Tse and to charge the assembled battery 4 within a short time without wastage.

Meanwhile, since the scheduled starting time Tse obtained by the controller 30 from the operation controller 61 is not an estimated value, it is also possible to further shorten the margin of 30 minutes.

### [Third Embodiment]

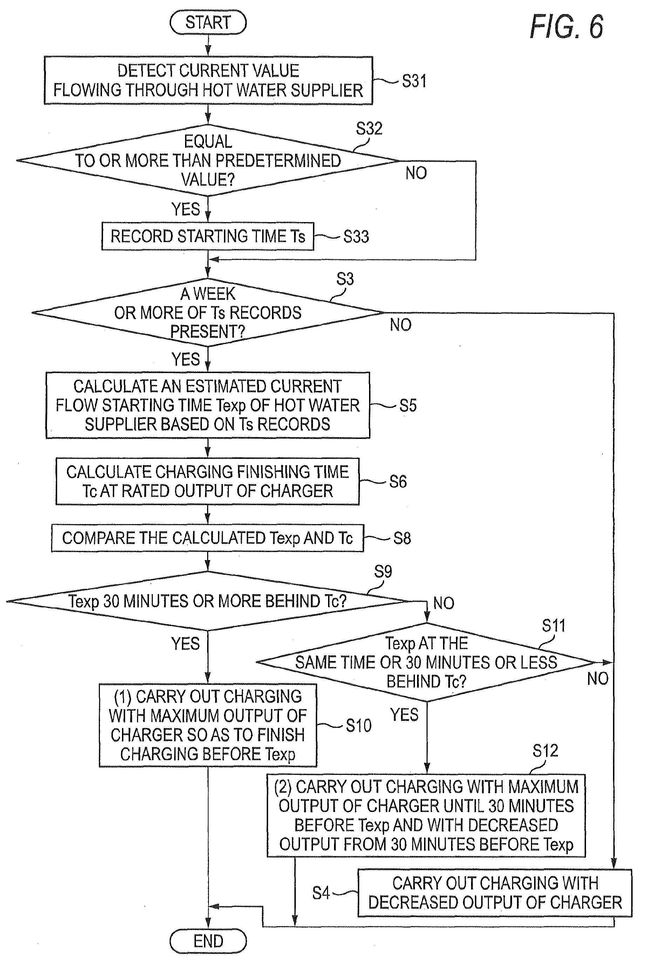

Fig. 6 is a flowchart illustrating the operation of the controller 30 according to the third embodiment to which the present invention is applied.

The third embodiment describes the power storage system 1 described in the above first embodiment, in which the operation controller 61 included in the heat pump hot water supplier 5 is constituted not to output starting signals or the controller 30 is constituted so as to be incapable of detecting starting signals output by the operation controller 61. Instead, an instrument current transformer (CT), not shown, is provided on a line connected with the heat pump hot water supplier 5 in the commercial electric power line 11 and detects electric current supplied to the heat pump hot water supplier 5, thereby detecting the starting signals of the heat pump hot water supplier 5.

The determination part 31 in the controller 30 detects electric current supplied to the heat pump hot water supplier 5 with the instrument current transformer provided on an electric power line connected to the heat pump hot water supplier 5 from or before the charging mode (Step S31), determines whether the current value exceeds a predetermined value (Step S32), and, in a case in which the current value exceeds the predetermined value (Step S32; Yes), the determination part 31 considers and stores the time in the memory 32 as the starting time Ts of the heat pump hot water supplier 5 (Step S33). Here, detection of the starting of the heat pump hot water supplier 5 based on the current value is performed at all times during the charging mode even after the above Steps S31 to S33, and, in a case in which starting signals are detected, starting times are stored in the memory 32.

After that, the controller 30 carries out the operations of Step S3 or later which have been described in the above first embodiment.

That is, the controller 30 calculates a charging finishing time Tc for a case in which the output current of the charger 34 is presumed to be the rated current value (Step S6), compares the obtained estimated starting time Texp and the charging finishing time Tc (Step S8), and determines whether the estimated starting time Texp falls 30 minutes or more behind the charging finishing time Tc (Step S9).

In a case in which the estimated starting time Texp falls 30 minutes or more behind the charging finishing time Tc (Step S9; Yes), the charging controller 33 selects the charging pattern (1) and performs charging (Step S10).

In addition, in a case in which the estimated starting time Texp does not fall 30 minutes or more behind the charging finishing time Tc (Step S9; No), the charging controller 33 determines whether the estimated starting time Texp corresponds to "being at the same time as or 30 minutes or less behind the charging finishing time Tc" (Step S11), and, in a case in which the estimated starting time Texp meets the above condition, selects the charging pattern (2) and performs charging (Step S12), and, in a case in which the estimated starting time Texp fails to meet the above condition, selects the charging pattern (3) and charges the assembled battery 4 (Step S4).

As described above, according to the third embodiment to which the present invention is applied, by detecting current values flowing through the heat pump hot water supplier 5, the starting time of the heat pump hot water supplier 5 is obtained, the estimated starting time Texp is estimated based on the obtained starting time, and the assembled battery 4 is charged by adjusting the constant current value during charging according to the boiling state of the heat pump hot water supplier 5. Thereby, even in a case in which a device which is in boiling during a time period in which the charging mode of the power storage unit 3 is performed is connected to the same commercial electric power line 11 so that the operation state of the device cannot be obtained directly from the device, it is possible to charge the assembled battery 4 in a manner of not exceeding the allowable current of the commercial electric power line 11 by accurately detecting the operation state of the above device.

Thus far, the present invention is explained with reference to the first to third embodiments, but the first to third embodiments merely show specific examples of application. The present invention is not limited to the embodiments. For example, the above embodiment described an example in which a device which is connected to both the power storage unit 3 and the commercial electric power line 11 and operates during the time period of the charging mode of the power storage unit 3 is the heat pump hot water supplier 5, but the present invention is not limited thereto, and thus a nighttime heat storage device for cooling or warming or the like may be connected to the commercial electric power line 11. In addition, the above embodiment described a configuration in which the controller 30 included in the power storage unit 3 detects the operation state of the heat pump hot water supplier 5, obtains a constant current value during the constant current control of the assembled battery 4, and carries out a variety of processes, such as selecting charging patterns, but the present invention is not limited thereto; therefore a controller provided in the power storage system 1, separately from the power storage unit 3, may carry out the above variety of processes or the above variety of processes may be carried out by a remote controller which is connected with the power storage system 1 through communication lines. Furthermore, it is also possible to have a configuration in which a power generation apparatus, such as a solar power generation apparatus, a gas engine-driven power generation apparatus or the like, is connected to the commercial electric power line 11 provided in the power storage system 1, and it is needless to say that arbitrary variations can be made in other parts of the detailed configuration or the like of the power storage system 1.

## Claims

1. A power storage system that controls a charging mode in which an assembled battery including a plurality of battery modules is charged, the assembled battery being charged through a constant current control based on a predetermined current value in the beginning of the charging mode and being charged through a constant voltage in the end of the charging mode, the power storage system comprising:
a determination part that determines whether an apparatus electrically connected to an electric power line which the power storage system is electrically connected is in active; and
a controlling part that constantly controls the current value for charging the assembled battery in the charging mode,
wherein in a case where the determination part determines that the apparatus is not in active, the controlling part sets the constant current value to a first current value in the beginning of a time period in which the charging mode is performed, and
wherein in a case where the determination part determines that the apparatus is in active, the controlling part sets the constant current value to a second current value lower than the first current value in the beginning of the time period in which the charging mode is performed.

2. The power storage system as set forth in claim 1, wherein the controlling part calculates a current value for use in the constant current control of the charging mode, which is necessary to charge the assembled battery substantially throughout the time period at up to a scheduled charging amount of electric energy, and the charging mode is started with the calculated current value.

3. The power storage system as set forth in claim 1 or 2, further comprising a memory that stores the current value for use in the constant current control of the charging mode for each scheduled charging amount of the electric energy,
wherein the controlling part retrieves the current value from the memory based on a scheduled charging amount of the electric energy.

4. The power storage system as set forth in claim 3, wherein the current value stored in the memory is set such that the sum of the current value and a current value used in the apparatus when the apparatus is in active does not exceed a predetermined current value.

5. The power storage system as set forth in claim 1,
wherein the controlling part obtains a scheduled time period in which the apparatus will be in active,
wherein the controlling part estimates an estimated time period in which the apparatus is not in active in the predetermined time period in the charging mode, and
wherein in a case where the assembled battery can be charged at up to a scheduled charging amount in the estimated time period, the charging mode will be executed in the estimated time period.

6. The power storage system as set forth in claim 1,
wherein the controlling part obtains a scheduled time period in which the apparatus will be in active,
wherein the controlling part estimates an estimated time period in which the apparatus is not in active in the predetermined time period in the charging mode, and
wherein in a case where the assembled battery cannot be charged at up to a scheduled charging amount in the estimated time period, the controlling part sets the current value to the second current value and the charging mode is started with the second current value.

7. The power storage system as set forth in claim 1 or 5, wherein the beginning of the charging mode includes a predetermined time period from a time point at which the charging mode is started.

8. The power storage system as set forth in any of claims 1 to 7, wherein the predetermined time period in which the charging mode is performed includes nighttime.

9. A power storage system that controls an assembled battery including a plurality of battery modules, and a charging mode in which the assembled battery is charged through a constant current control based on a constant current value in the beginning of charging of the assembled battery and is charged through a constant voltage control in the end of the charging of the assembled battery,
wherein when determining that an apparatus electrically connected an electric power line to which the power storage system is electrically connected is in active in the beginning of a time period in which the charging mode is performed, the constant current value for charging the assembled battery in the charging mode is set smaller than a value used when the apparatus is not in active.

10. A controlling method of a power storage system that controls an assembled battery including a plurality of battery modules, and a charging mode in which the assembled battery is charged through a constant current control based on a constant current value in the beginning of charging of the assembled battery and is charged through a constant voltage control in the end of the charging of the assembled battery, the method comprising:
determining whether an apparatus electrically connected an electric power line to which the power storage system is electrically connected is in active in the beginning of a time period in which the charging mode is performed; and
setting the constant current value for charging the assembled battery in the charging mode smaller than a value used when the apparatus is not in active, if it is determined that the apparatus is in active.
